# EUROPÄISCHE PATENTSCHRIFT

(11) **EP 2 374 429 B1**
(45) Veröffentlichungstag und Bekanntmachung des Hinweises auf die Patenterteilung: **19.11.2014**
(21) Anmeldenummer: 10159393.7
(22) Anmeldetag: 08.04.2010
(51) Int. Cl.: A61C 7/14

(54) **Montageanordnung mit Hilfsmittel und kieferorthopädischem Bracket**
Fitting assembly with aid and orthodontic bracket
Agencement de montage doté d'un dispositif d'aide et d'un bracket orthodontique

(43) Veröffentlichungstag der Anmeldung: 12.10.2011
(73) Patentinhaber: Heiser, Wolfgang, 6020 Innsbruck (AT)
(72) Erfinder: Heiser, Wolfgang, 6020 Innsbruck (AT)
(74) Vertreter: Caspary, Karsten

(56) Entgegenhaltungen:
- EP-A1- 1 374 795
- US-A- 4 626 208
- US-A- 5 542 842

## Beschreibung

Die vorliegende Erfindung betrifft eine Montageanordnung bei der Korrektur von Zahlfehlstellung mit Hilfe von kieferorthopädischen Brackets, insbesondere ein Hilfsmittel und ein dazu gehöriges kieferorthopädisches Bracket.

Eine Möglichkeit zur Korrektur von Zahnfehlstellungen stellt die Verwendung von Brackets dar, die auf die Zähne des Unter- oder Oberkiefers des Patienten in vordefinierten Stellungen aufgeklebt und anschließend mittels eines elastischen Richtdrahtbogens miteinander verbunden werden. Dabei werden die Brackets an den einzelnen Zähnen in einer Position aufgebracht, die so gewählt ist, dass am Ende der kieferorthopädischen Behandlung der durch die Brackets verlaufende Richtdrahtbogen im Wesentlichen frei von Wellen ist. Am Beginn der Behandlung weist der Richtdraht deshalb einen sehr komplexen Verlauf auf, wobei je nach Fehlstellung der Zähne der relativ große Drahtbogen, der dem Kieferbogen folgt, mehr oder weniger in und außerhalb der von ihm beschriebenen Ebene gewellt ist.

Um die richtige Position zu bestimmen, in der die Brackets an den Zähnen angeklebt werden sollen, gibt es zwei grundsätzliche Ansätze. Beim ersten Ansatz, dem so genannten direkten Verfahren, werden die Zähne des Patienten unmittelbar ohne Abdruck mit Hilfe von geeigneten Messwerkzeugen optisch vermessen. Dabei kommen ein "händisches" Verfahren, bei dem die Messwerte per Hand aufgenommen und ausgewertet werden, oder ein computergestütztes Verfahren alternativ zum Einsatz.

Beim rechnergestützten Verfahren werden die aufgenommenen Messwerte von einem Computerprogramm verarbeitet, das nicht nur die Bracketpositionen ermittelt, sondern auch eine Drahtbiegemaschine steuert, mit der ein Satz Richtdrähte unterschiedlicher Querschnitte, die im Verlaufe der Behandlung am Patienten nacheinander zum Einsatz kommen, jeweils in eine relativ komplizierte Gestalten gebogen wird, die die individuelle Fehlstellung der Zähne berücksichtigen. Diese Technik wird insbesondere angewendet, wenn linguale, d.h. zur Zungenseite hin liegende Brackets verwendet werden sollen, weil die Zahnformen auf der lingualen Seite von Individuum zu Individuum sehr verschieden sind. Dort kann man sich nicht am Umriss der Zahnkrone orientieren, im Gegensatz zu dem Kronenbild auf der labialen, d.h. der äußeren, zu den Lippen gewandten Seite, auf der die Zähne trotz der Individualität der Menschen weitgehend übereinstimmende Formen aufweisen.

Beim "händischen" Verfahren sind die Messungen im Mund des Patienten meist sehr ungenau, was zu erheblichen Fehlern bei der Bestimmung der Bracketpositionen führen kann. Andererseits ist die Computertechnik kostspielig und sehr aufwändig. Angesichts der relativ geringen Zahl kieferorthopädischer Behandlungen mittels lingualer Brackets ist die Anschaffung einer solchen Ausrüstung für den einzelnen Kieferorthopäden unwirtschaftlich.

Der zweite, gebräuchlichere Ansatz zur Bestimmung der Bracketpositionen auf den Zähnen ist die sogenannte Hiro-Technik. Dabei wird zunächst vom Kieferorthopäden ein Abdruck von dem zu korrigierenden Gebiss gemacht. Aus diesem Abdruck wird im Zahntechniklabor ein Gipsabguss des zu korrigierenden Gebisses gefertigt. Dieser Abguss wird in die einzelnen Zähne zersägt und mit Hilfe von Wachs so wieder zusammengesetzt, dass sich die perfekte Bisslage bzw. Okklusion ergibt, die durch die kieferorthopädische Behandlung erreicht werden soll. Anschließend wird der Richtdrahtbogen erstellt, auf dem Drahtbogen werden Brackets angebracht, und der Bogen wird zusammen mit den Brackets so an der lingualen Seite des korrigierten Abgusses in Position gebracht, dass die Brackets den Zähnen in vorgeschriebener Weise gegenüberstehen, wobei zwischen den Brackets und den Zähnen ein bestimmter Abstand eingehalten wird, der später mit einer Vergussmasse ausgefüllt werden soll. Sodann werden mit einem lichthärtenden Acrylharz einzelne Käppchen über jeder Zahnschneide geformt, die sich bis zu den Brackets erstrecken und an diesen anhaften. Nach dem Aushärten der Käppchen werden die Brackets vom Richtdraht heruntergenommen. Sodann werden die Käppchen mit den daran hängenden Brackets einzeln wieder auf die Zähne des korrigierten Abgusses aufgesetzt, und die Zwischenräume zwischen den Fußplatten der Brackets und den Zahnkronen werden mit einer härtenden Vergussmasse ausgefüllt, womit eine sogenannte individuelle Basis für jedes Bracket erstellt ist. Es versteht sich, dass dabei ein Trennmittel an den Zähnen des korrigierten Abgusses verwendet wird, um ein Anhaften der Vergussmasse an den Zähnen zu vermeiden.

Nach Abschluss dieser vorbereitenden Laborarbeiten wird der Satz Brackets vom Kieferorthopäden unter Verwendung eines dünnen Kleberfilms auf den zugehörigen Zähnen des zu korrigierenden Gebisses festgeklebt, wobei die Käppchen wiederum als Lehren dienen, die die Brackets auf den Zähnen exakt so positionieren, wie sie am korrigierten Gipsabguss positioniert waren. Nach dem Aushärten des Klebers werden die Käppchen weggebrochen, was eine zeitaufwendige Arbeit ist, weil das Acrylmaterial vollständig von den Brackets entfernt werden muss.

Nachteilig bei beiden Ansätzen ist, dass es nach dem unbeabsichtigten Lösen eines Bracket von einem Zahn während der gesamten kieferorthopädischen Korrekturbehandlung schwierig ist, das betreffende Bracket wieder vorschriftsmäßig an dem Zahn anzubringen. Diese Arbeit kann nur unter Einsatz des Labors durchgeführt werden. Es ist bei "händischer" oder Computervermessung eine vollkommen neue Vermessung erforderlich, und es muss ein neuer Drahtsatz angefertigt werden, weil der Patient in aller Regel nicht sofort seinen Kieferorthopäden aufsucht und sich die Zahnstellungskorrektur in der Zwischenzeit rückstellen kann. Das unbeabsichtigte Lösen eines Bracket ist gar nicht so selten. Es kommt bei jedem Patienten in der Regel einmal während der Behandlungsdauer vor. Bei der Hiro-Technik muss anhand des Richtdrahtbogens im Labor für ein neues Bracket eine neue individuelle Basis einschließlich einer Acrylkappe gefertigt werden.

In der EP 1 374 795 A1, worauf des zweiteilige Form der Ansprüche 1 und 9 basiert, wird zur Behebung der oben angesprochenen Nachteile ein Montagehilfsmittel vorgeschlagen bestehend aus einem Blechstreifen, der Einrichtungen zur formschlüssigen Anlage an dem Bracket, eine Halteeinrichtung zum Verankern einer elastischen Spanneinrichtung an dem Blechstreifen für die Fixierung des Blechstreifens an dem Bracket und eine sich von der Halteeinrichtung weg erstreckende Fahne aufweist.

Bei der Verwendung des bekannten Montagehilfsmittels nach EP 1 374 795 A1 wird zunächst wie bei der oben beschriebenen Hiro-Technik verfahren. Bevor jedoch die Brackets an dem Drahtbogen angebracht werden, oder danach, wird an jedem Bracket das Montagehilfsmittel angebracht. Dieses ist so gestaltet, dass es am Bracket anliegt und daran mittels einer Spannvorrichtung lösbar befestigt ist. Sein erstes Ende erstreckt sich in Richtung auf die Okklusalebene der Zähne und vorzugsweise über diese hinaus. Anschließend werden in der üblichen Weise mit lichthärtendem Acrylharz die genannten Käppchen an den Zähnen geformt, jedoch mit dem Unterschied gegenüber der bekannten Technik, dass die Käppchen nur das erste Ende des Montagehilfsmittels einbetten, nicht aber das an dem Montagehilfsmittel befestigte Bracket. Anschließend wird das Acrylharz ausgehärtet.

Die weitere Verarbeitung sieht dann in üblicher Weise die Erstellung der individuellen Basis an jedem Bracket vor. Der so fertig gestellte Bracketsatz wird zusammen mit den daran angebrachten, in die Käppchen eingebetteten Montagehilfsmitteln dem Kieferorthopäden zur Verfügung gestellt, der die Brackets an den fehlstehenden Zähnen in Stellung bringt. Die Käppchen mit den daran haftenden Montagehilfsmitteln bilden somit Montagelehren für die Anbringung der Brackets in vorbestimmten Stellungen an den Zähnen, in denen die Brackets vom Kieferorthopäden mittels eines dünnen Kleberfilms an den Zähnen angeklebt werden. Nach dem Aushärten des Klebers löst der Kieferorthopäde die Montagelehren von den Brackets. Es ist hierzu nicht erforderlich, irgendetwas zu zerstören. Der Kieferorthopäde hebt die mit individuellen Kennzeichnungen versehenen Montagelehren üblicherweise auf, so dass er sie später wieder verwenden kann, wenn es notwendig werden sollte, weil sich ein Bracket von einem Zahn gelöst hat.

Die Verwendung der in der EP 1 374 795 A1 vorgestellten Montagehilfsmittel weist jedoch Nachteile auf. Zum einen ist die Fixierung der Montagehilfsmittel an den Brackets mittels der Spannelemente nicht besonders exakt, da Verschiebungen und/oder Verdrehungen auftreten können. Zum anderen ist die Handhabung relativ komplex aufgrund der sehr kleinen Abmessungen und der Vielzahl der Vorsprünge, Haken usw., die für die Befestigung mittels der Spannelemente notwendig sind. Sowohl das Anbringen der Montagehilfsmittel als auch deren Ablösen von den Brackets ist wegen der vielen Elemente bzw. Einrichtungen und der notwendigen Spezialwerkzeuge recht umständlich.

Es ist daher die Aufgabe der vorliegenden Erfindung, eine Kombination aus einem Montagehilfsmittel und einem Bracket bereit zu stellen, deren Handhabung, Konstruktion und Herstellung sehr einfach ist, gleichzeitig eine exakte und feste Verbindung zwischen den beiden Elementen herstellt, wenig Materialeinsatz erfordert und für eine Vielzahl von auf dem Markt befindlichen Brackets flexibel einsetzbar ist.

Diese Aufgabe wird durch das Montagehilfsmittel mit den Merkmalen des Anspruchs 1 sowie das Bracket mit den Merkmalen des Anspruchs 9 gelöst. Vorteilhafte Ausgestaltungen sind Gegenstand der abhängigen Ansprüche.

Erfindungsgemäß umfasst das Hilfsmittel für die Montage von kieferorthopädischen Brackets, das aus einem Materialstreifen gebildet ist, ein erstes Ende und ein zweites Ende, das Einrichtungen zur formschlüssigen Anlage an dem Bracket aufweist, wobei die Einrichtungen zur formschlüssigen Anlage zwei Schenkel umfassen, die sich gabelartig an dem zweiten Ende erstrecken und deren Längsseiten im Wesentlichen parallel zueinander sind, wobei das Hilfsmittel dort, wo sich die beiden Schenkel vom Mittelkörper erstrecken, einen Schlitz aufweist.

Weiterhin erfindungsgemäß ist ein kieferorthopädisches Bracket mit einer Grundplatte, die eine Unterseite zur Befestigung an einem Zahn und eine Oberseite aufweist, und einem sich auf der Oberseite erstreckenden Aufbau mit mindestens zwei Flügeln, zwischen denen sich ein Schlitz zur Aufnahme eines Richtdrahtes erstreckt, wobei der Aufbau seitlich jeweils eine Führungsrille zum Aufschieben eines Hilfsmittels aufweist, die im Wesentlichen parallel zueinander verlaufen.

Diese beiden Elemente bilden erfindungsgemäß eine Montageanordnung für die Montage eines kieferorthopädische Brackets an einem Zahn, wobei das Montagehilfsmittel lösbar mit dem kieferorthopädischen Bracket formschlüssig durch Aufeinanderschieben verbindbar ist, indem durch Aufschieben die Längsseiten der Schenkel des Montagehilfsmittels in die Führungsrillen des Brackets eingreifen. Damit sind die beiden erfindungsgemäßen Gegenstände durch ein gemeinsames erfinderisches Prinzip verbunden und stehen dadurch ähnlich dem Stecker-Buchse-Prinzip miteinander in Bezug. Besonders zu erwähnen ist, dass das Montagehilfsmittel erfindungsgemäß sowohl außen am Bracketaufbau als auch innen am Bracketaufbau angreifen kann, sofern die entsprechenden Seitenflächen des Bracketaufbaus für die Aufnahme der Längsseiten der Schenkel des Hilfsmittels geeignet sind. Dies können je nach Ausführungsform des Hilfsmittels die Innenlängsseiten oder die Außenlängsseiten der Schenkel sein.

Mit der erfindungsgemäßen Montageanordnung ist die Handhabung bei der erstmaligen Anpassung und gegebenenfalls beim nachträglichen Anbringen von lingualen als auch bukkalen Brackets sehr einfach. Insbesondere kann auf zusätzliche Elemente wie Spannringe o.ä. und auch auf Zusatzwerkzeuge verzichtet werden. Durch die formschlüssige und doch lösbare Verbindung ist eine sehr exakte Positionierung des Brackets möglich. Der einfache Aufbau des Montagehilfsmittels spart im Vergleich zu bisherigen Lösungen Material ein und bietet eine hohe Flexibilität, denn die Produktionskosten von Montagehilfsmittel unterschiedlicher Größe für unterschiedliche Bracketbreiten, die meist zwischen etwa 2 mm und 5 mm liegen, sind gering.

Es hat sich herausgestellt, dass eine Einbaubreite, d.h. der Abstand zwischen den parallelen Längsseiten der Schenkel, von ca. 0,05 mm bis 0,1 mm geringer als der Breite des Brackets, gegebenenfalls unter Berücksichtigung der Tiefe der Führungsrillen, optimale Ergebnisse hinsichtlich der Handhabbarkeit und Fixierung liefert. Es sind alternativ auch andere Abstände möglich, die für eine ausreichende Elastizität und eine ausreichende Reibung sorgen, so dass eine exakte, einfach erreichbare und wieder lösbare Verbindung erzielt wird.

Bevorzugt ist das Montagehilfsmittel achsensymmetrisch ausgebildet und der Schlitz erstreckt sich im Wesentlichen entlang und auf der Symmetrieachse, die vom ersten zum zweiten Ende verläuft.

Besonders vorteilhaft weil einfach und preisgünstig herzustellen ist ein Montagehilfsmittel aus Blech einer Dicke von ca. 0,15 mm bis ca. 0,8 mm. Des Weiteren ist bevorzugt, wenn der Schlitz eine Länge von ca. 1,0 mm bis ca. 5,0 mm und eine Breite von ca. 0,1 mm bis ca. 0,8 mm aufweist.

Mit Vorteil weist mindestens ein Schenkel mindestens eine Ausnehmung auf. Beispielsweise weisen die Schenkel an jedem Ende eine runde Ausnehmung auf, in die eine Spreizzange eingreifen kann, um den Vorgang des Anbringens oder Lösens zu unterstützen. Alternativ kann die Form der Ausnehmung eine zweckmäßige andere Ausgestaltung aufweisen wie z.B. eine quadratische, elliptische oder polygonale etc.

Auch das erste Ende kann bevorzugt mindestens eine Ausnehmung aufweisen, so dass man auch dort mit einem geeigneten Werkzeug wie z.B. einer Zange angreifen kann, um das erste Ende zu verbiegen. Damit wird üblicherweise eine bessere Fixierung der Käppchen erreicht. Auch eine Verbreiterung des ersten Endes kann dabei von Vorteil sein.

Mit weiterem Vorteil weist der Schlitz an seinem geschlossenen Ende einen verbreiterten Abschnitt auf. Die Form des verbreiterten Abschnitts kann z.B. rund, elliptisch oder polygonal sein. Durch diesen Abschluss des Schlitzes wird eine zusätzliche Stabilität der Federwirkung durch den Schlitz erzeugt. Gleichzeitig kann Material eingespart werden.

Es versteht sich, dass erfindungsgemäß eine Verbindung zwischen Montagehilfsmittel und Bracket auch dann wirksam erfolgen kann, wenn das Bracket seitlich keine Führungsrillen aufweist, sondern nur zwei parallele Seitenflächen, an denen die Längsseiten der Schenkel des Montagehilfsmittels angreifen können.

Es ist ebenfalls möglich, dass die Führungsrillen nicht ganz gerade, sondern leicht gebogen, jedoch parallel zueinander, ausgebildet sind. Mit anderen Worten kommt es insbesondere darauf an, dass die Führungsrillen am Bracket parallel zueinander verlaufen, aber die relative Anordnung bezogen auf die Unterseite des Brackets flexibel ist. Dadurch bietet sich eine Flexibilität, die aufgrund von besonders starken Zahnfehlstellungen oder anderer geometrischer Anforderungen notwendig ist.

Die Erfindung wird nachfolgend unter Bezugnahme auf die in den Zeichnungen dargestellten Ausführungsbeispiele näher erläutert. Es zeigen:
- Fig. 1: eine Draufsicht auf ein erfindungsgemäße Montagehilfsmittel gemäß einer ersten Ausführungsform der Erfindung;
- Fig. 2: eine Seitenansicht des Montagehilfsmittels nach Fig. 1;
- Fig. 3: eine Draufsicht auf ein erfindungsgemäßes Montagehilfsmittel gemäß einer zweiten Ausführungsform der Erfindung;
- Fig. 4: eine Draufsicht auf ein erfindungsgemäßes Montagehilfsmittel gemäß einer dritten Ausführungsform der Erfindung;
- Fig. 5: eine Draufsicht eines Brackets aus dem Stand der Technik, das geeignet ist, mit einem erfindungsgemäßen Montagehilfsmittel zusammenzuwirken.
- Fig. 6: eine Draufsicht eines erfindungsgemäßen Brackets gemäß einer bevorzugten Ausführungsform der Erfindung;
- Fig. 7: eine Seitenansicht des Brackets nach Fig. 6;
- Fig. 8: eine Draufsicht einer Montageanordnung aus einem erfindungsgemäßen Montagehilfsmittel nach Fig. 1 und dem Bracket nach Fig. 5;
- Fig. 9: eine Draufsicht einer erfindungsgemäßen Montageanordnung mit einem Montagehilfsmittel nach Fig. 1 und einem Bracket nach Fig. 6;
- Fig. 10: eine Seitenansicht der erfindungsgemäßen Montageanordnung nach Fig. 9;
- Fig. 11: eine Draufsicht auf ein erfindungsgemäße Montagehilfsmittel gemäß einer dritten Ausführungsform der Erfindung;
- Fig. 12: eine Seitenansicht des Montagehilfsmittels nach Fig. 11;
- Fig. 13: eine Draufsicht eines erfindungsgemäßen Brackets gemäß einer weiteren Ausführungsform der Erfindung;
- Fig. 14: eine Seitenansicht des Brackets nach Fig. 13;
- Fig. 15: eine Draufsicht einer erfindungsgemäßen Montageanordnung mit einem Montagehilfsmittel nach Fig. 11 und einem Bracket nach Fig. 13;
- Fig. 16: eine Seitenansicht der erfindungsgemäßen Montageanordnung nach Fig. 15;
- Fig. 17: eine perspektivische Ansicht eines erfindungsgemäßen Brackets gemäß einer weiteren Ausführungsform der Erfindung;
- Fig. 18: eine perspektivische Ansicht einer erfindungsgemäßen Montageanordnung mit dem Bracket nach Fig. 11 und einem Montagehilfsmittel nach Fig. 1 in einer ersten, nicht vollständig aufgeschobenen Position;
- Fig. 19: eine perspektivische Ansicht der erfindungsgemäßen Montageanordnung nach Fig. 12 mit vollständig auf das Bracket aufgeschobenem Montagehilfsmittel.

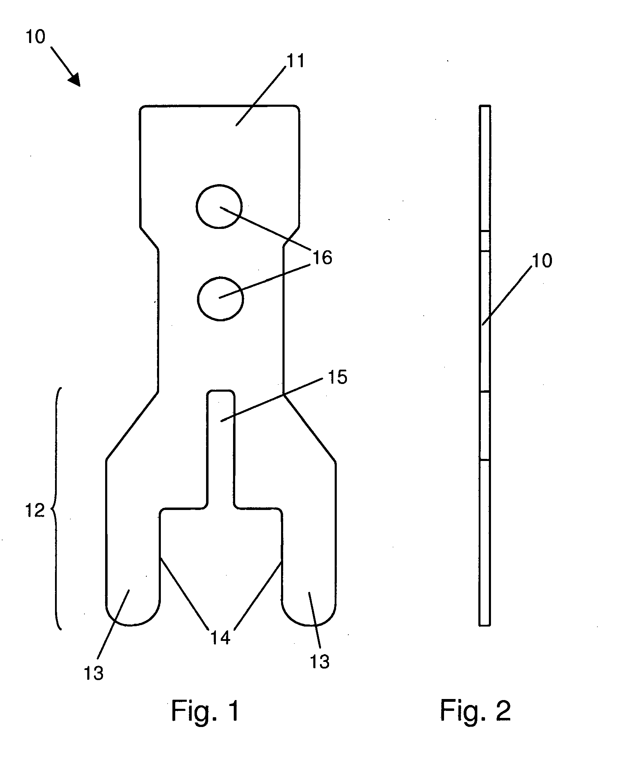

Fig. 1 zeigt in Draufsicht eine erste Ausführungsform eines erfindungsgemäßen Hilfsmittels 10 in stark vergrößertem Maßstab. Es ist in diesem Zusammenhang anzumerken, dass die für die erfindungsgemäße Monatageanordnung verwendeten Bauteile, d. h. das erfindungsgemäße Montagehilfsmittel und das erfindungsgemäße Bracket, relativ kleine Bauteile sind, und dementsprechend sind auch sämtliche in den Figuren in stark vergrößertem Maßstab abgebildeten Bauteile sehr klein. Die Gesamtlänge des Montagehilfsmittels 10 beträgt beispielsweise etwa 10 mm, die größte Breite beträgt etwa 5 mm, entsprechend dimensioniert sind die übrigen Einzelheiten des Bauteils.

Das Montagehilfsmittel 10 ist aus einem Blechstreifen von etwa 0,2 mm Dicke hergestellt.

Es umfasst ein erstes Ende 11, ein Mittelteil sowie ein zweites Ende 12. In der dargestellten Ausführungsform von Fig. 1 ist das Montagehilfsmittel 10 achsensymmetrisch bezüglich einer Mittelachse ausgebildet, die vom ersten Ende 11 zum zweiten Ende 12 hin verläuft. Das zweite Ende 12 weist zwei im Wesentlichen gleich lange, parallele Schenkel 13 auf, die jeweils Innenlängsseiten 14 aufweisen, die parallel zueinander sind. An der Wurzel der gabelartigen Öffnung der beiden Schenkel 13 befindet sich ein Schlitz 15, der eine Breite von ca. 0,5 mm und einer Länge von ca. 2,3 mm im dargestellten Ausführungsbeispiel aufweist. Das erste Ende 11 ist bezogen auf das Mittelteil etwas verbreitert und weist mittig zwei runde Ausnehmungen 16 auf, in die beispielsweise ein Werkzeug eingreifen kann. Die Breite des Montagehilfsmittels 10 ist an seinem zweiten Ende 12 größer als an seinem ersten Ende 11.

Fig. 2 zeigt in Seitenansicht das Montagehilfsmittel 10 aus Fig. 1. Man erkennt den relativ dünnen Blechstreifen, der beispielsweise durch Stanzen, Schneiden, Fräsen oder Sägen aus dem Blechmaterial relativ einfach hergestellt werden kann.

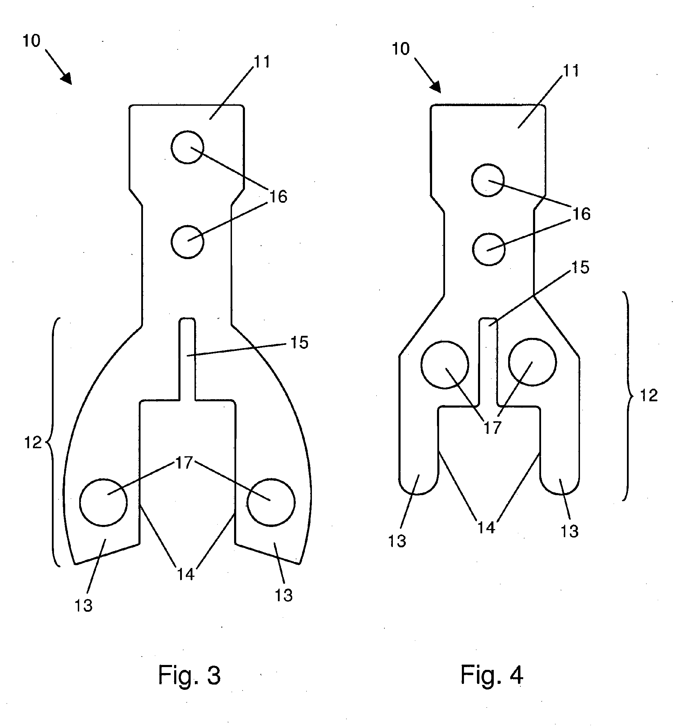

Fig.3 zeigt eine Draufsicht eines erfindungsgemäßen Montagehilfsmittels gemäß einer zweiten Ausführungsform. Dabei ist die Konfiguration des ersten Endes 11 im Wesentlichen identisch mit der Konfiguration des Montagehilfsmittels aus Fig. 1, die Form der Schenkel 13 ist jedoch unterschiedlich. Man erkennt, dass die Schenkel 13 an ihrer Außenseite eine gebogene Form aufweisen und an ihrem Ende jeweils eine runde Ausnehmung 17 aufweisen. In diese Ausnehmungen 17 kann eine Spreizzange oder ein ähnliches Werkzeug eingreifen, um die Schenkel auseinander zu bewegen und so beim Aufschieben oder beim Trennen von einem Bracket zu unterstützen. Die Form der Ausnehmung 17 muss dabei nicht rund sein - es können auch andere geeignete Ausgestaltungen wie z.B. elliptisch, rechteckig, polygonal usw. vorgesehen sein.

Fig. 4 zeigt eine Draufsicht eines erfindungsgemäßen Montagehilfsmittels gemäß einer weiteren Ausführungsform, wobei das zweite Ende 12 auf beiden Seiten des Schlitzes 15 jeweils eine Ausnehmung 17 aufweist, in die eine Spreizzange wie oben beschrieben eingreifen kann. Im Unterschied zu dem in Fig. 3 dargestellten Ausführungsbeispiel die Ausnehmungen 17 nicht am Ende der Schenkel 13, sondern in Richtung Mittelteil des Montagehilfsmittels positioniert. Dies bedeutet aufgrund der unterschiedlichen Hebel eine höhere Kraft, die für das Auseinanderbiegen der beiden Schenkel 13 mittels einer Spreizzange aufzubringen ist.

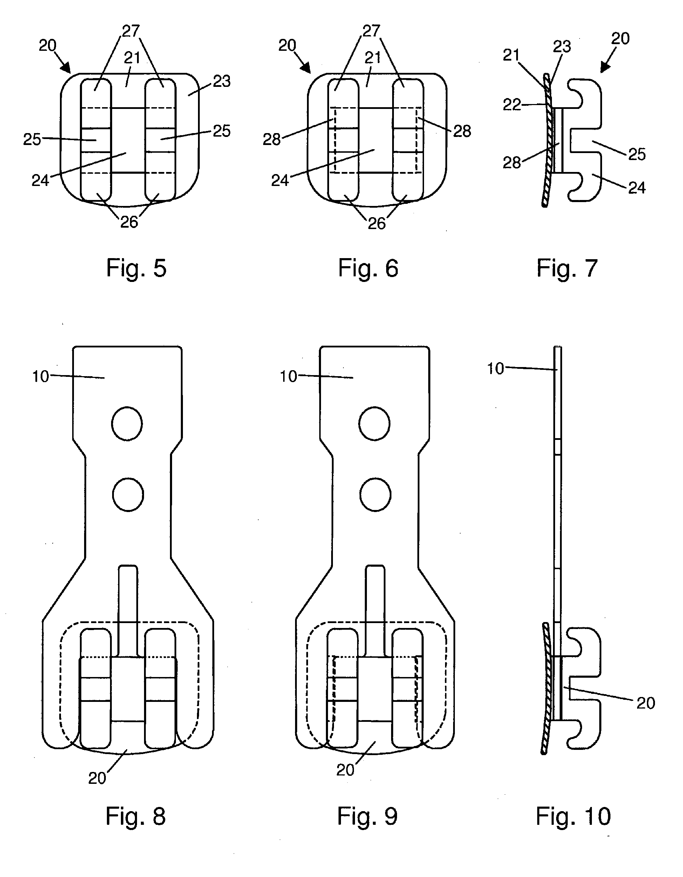

Fig. 5 zeigt eine Draufsicht eines an sich bekannten Brackets 20, das jedoch auch mit dem erfindungsgemäßen Montagehilfsmittel 10 unter bestimmten Bedingungen zu einer erfindungsgemäßen Montageanordnung für Brackets kombiniert werden kann. Das Bracket 20 umfasst eine Grundplatte 21, deren Unterseite 22 auf den Zahn aufgeklebt wird. Von der Oberseite 23 der Grundplatte 21 erstreckt sich ein Aufbau 24, der einen Schlitz 25 zur Aufnahme eines Richtdrahtes aufweist. In der in Fig. 5 dargestellten Ausführungsform umfasst der Aufbau zwei erste Flügelhälften 26 sowie zwei zweite Flügelhälften 27, zwischen denen sowohl der erwähnte Schlitz 25 für den Richtdraht als auch ein senkrecht zu dem Schlitz angeordneter Leerraum befindet. Entscheidend für das erfindungsgemäße Zusammenwirken zwischen Montagehilfsmittel und Bracket ist die Ausgestaltung der Außen- bzw. Seitenflanken des Aufbaus 24 vertikal zum Richtungsverlauf des Schlitzes 25. Sofern die beiden Seitenflanken des Aufbaus 24 parallel zueinander sind und im Wesentlichen eine plane Oberfläche aufweisen, ist das Bracket geeignet, vom Montagehilfsmittel 10 fixiert zu werden, wie nachfolgend unter Bezugnahme auf Fig. 8 beschrieben wird.

Fig. 6 zeigt eine Draufsicht eines erfindungsgemäßen Brackets, das im Prinzip denselben Aufbau 20 mit denselben Elementen aufweist, wie das an sich bekannte Bracket nach

Fig. 5. Der Unterschied zwischen diesen beiden Ausführungsformen besteht darin, dass die seitlichen Flanken des Aufbaus 24 jeweils eine Führungsrille 28 aufweisen, die parallel zueinander sind und im Wesentlichen gerade, so dass das Montagehilfsmittel 10 nach Arte eines Maulschlüssels exakt in die Führungsrillen eingreifen und auf das Bracket 20 aufgeschoben werden kann, wie unten unter Bezugnahme auf die Fig. 9 und 10 beschrieben wird.

Fig. 7 zeigt die Ausführungsform des Brackets auf Fig. 6 in Seitenansicht, wobei hier deutlich der Schlitz 25 und die Führungsrillen 28 zu erkennen sind. Die Breite und die Tiefe der Führungsrillen 28 muss derart strukturiert sein, dass ein problemloses Aufschieben des Montagehilfsmittels 10, ein ausreichender Halt und auch ein Abziehen des Montagehilfsmittels 10 von dem Bracket 20 ermöglicht ist.

Die Fig. 8, 9 zeigen in Draufsicht eine erfindungsgemäße Montageanordnung mit den Brackets aus den Fig. 5 bzw. 6 und dem Montagehilfsmittel 10 der Ausführungsform nach Fig. 1. In Fig. 8 erkennt man, wie das Montagehilfsmittel 10 den Aufbau 24 des Brackets 20 formschlüssig entlang der Innenlängsseiten 14 der Schenkel 13 umgreift. Der Schlitz 15 des Montagehilfsmittels 10 wird dabei unter Berücksichtigung der Elastizität des Blechmaterials um ein kleines Stück zur Öffnung hin aufgeweitet, sodass sich eine ausreichende Klemmung und Fixierung ergibt. Da das Bracket in der Ausführungsform nach Fig. 8 keine seitlichen Führungsrillen aufweist, ist die Verbindung nicht ganz so exakt wie bei den Ausführungsformen mit Führungsrillen (siehe Fig. 9 unten), denn zumindest theoretisch könnten sich die Innenlängsseiten 14 der Schenkel 13 etwas verkeilen, so dass die Ausrichtung des Montagehilfsmittels 10 in Aufschiebebene nicht exakt vertikal zum Verlauf der seitlichen Flanken des Aufbaus 24 des Brackets 20 ist.

Die Fig. 9 und 10 zeigen in Drauf- bzw. Seitenansicht die erfindungsgemäße Montageanordnung bestehend aus dem Montagehilfsmittel 10 und dem Bracket nach Fig. 6 bzw. 7. Die Fixierung oder Verbindung zwischen Montagehilfsmittel und Bracket ist in dieser hier dargestellten Ausführungsform besser als in der Ausführungsform nach Fig. 8, weil die Führungsrillen 28 für eine exakte Führung und damit Positionierung der Innenlängsseiten 14 der Schenkel 13 des Montagehilfsmittels 10 an den seitlichen Flanken des Aufbaus 24 des Brackets 20 sorgen.

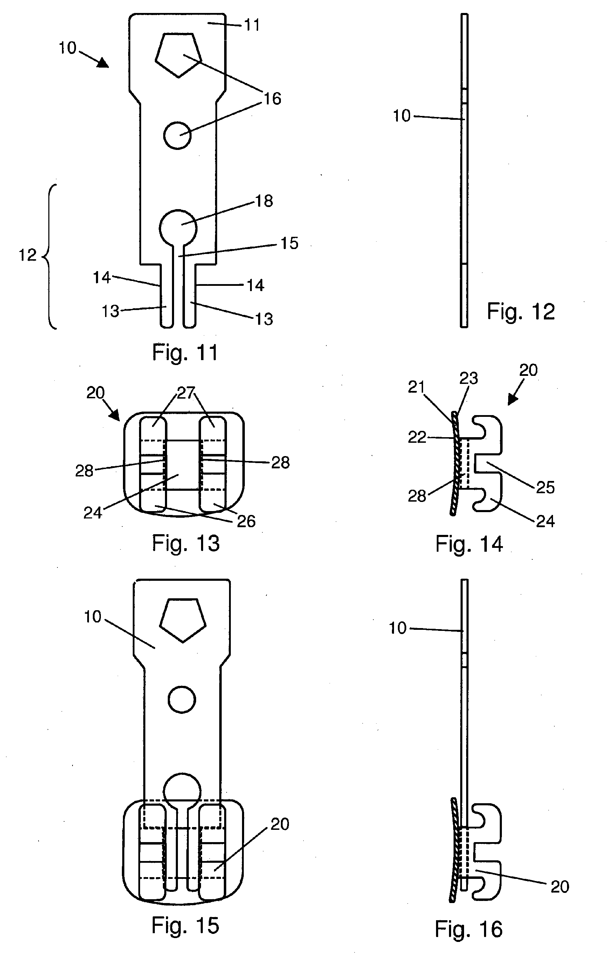

Fig. 11 zeigt in Draufsicht eine weitere bevorzugte Ausführungsform des erfindungsgemäßen Hilfsmittels. Da die Mehrzahl der Elemente im Wesentlichen identisch mit den in Bezug auf die in Fig. 1 dargestellten Ausführungsform beschriebenen Elemente sind, wird hier nur auf die Unterschiede eingegangen. Der wesentliche Unterschied besteht darin, dass die am zweiten Ende 12 des Montagehilfsmittels 10 angeordneten Schenkel 13 sich in Verlängerung des Schlitzes 15 erstrecken. Die beiden Schenkel 13 sind in dieser Ausführungsform nicht nach der Art eines Maulschlüssels, sondern eher nach Art einer dünnen Gabel. Dies kann bei der Handhabung Vorteile mit sich bringen, weil das benötigte Volumen kleiner ist als bei den oben erläuterten Ausführungsformen. Bei dem Hilfsmittel 10 aus Fig. 11 weist der Schlitz 15 an seinem geschlossenen Ende einen verbreiterten Abschnitt 18 in Form eines Kreises auf, in den auch ein Werkzeug eingreifen kann. Für die erfindungsgemäße Funktion weisen die Schenkel 13 in dieser Ausführungsform auf ihrer Außenseite Längsseiten 14 auf, die parallel zueinander sind. Die Innenlängsseiten bilden die Begrenzung des Schlitzes 15.

Fig. 12 zeigt das Montagehilfsmittel 10 in Seitenansicht. Die Dicke des Blechmaterials beträgt ca. 0,25 mm.

In Fig. 13 erkennt man in Draufsicht ein erfindungsgemäßes Bracket 20, das zusammen mit dem Montagehilfsmittel aus Fig. 11 die in Fig. 15 dargestellte Montageanordnung gemäß einer weiteren Ausführungsform der Erfindung bildet. Die wesentlichen Bestandteile des Brackets 20 sind identisch mit den mit Bezug auf die Fig. 6 beschriebenen, wobei der Unterschied darin besteht, dass die Führungsrillen 28 nicht auf den Außenflächen des Aufbaus 24, sondern auf dessen Innenflächen, hier senkrecht zum Schlitz 25, angeordnet sind. Es versteht sich, dass bei dem in dieser Ausführungsform dargestellten Aufbau 24 der Zwischenraum jeweils zwischen den ersten und zweiten Flügelhälften 26 bzw. 27 so tief sein muss, dass sich die Führungsrillen 28 darin anbringen lassen. Fig. 14 zeigt das Bracket aus Fig. 13 in Querschnittansicht.

Die Fig. 15 und 16 zeigen die zu einer erfindungsgemäßen Montageanordnung zusammengesetzten Bestandteile Hilfsmittel 10 und Bracket 20 in Drauf- bzw. Querschnittansicht. Man erkennt gut, wie sich das Hilfsmittel 10 innen im Aufbau 24 des Bracket befindet und die Längsseiten 14 der Schenkel 13 in die Führungsrillen 28 eingreifen und dadurch die notwendige Fixierung herstellen. Auch hier gilt, dass das Bracket 20 nicht notwendigerweise Führungsrillen 28 am Aufbau aufweisen muss, sondern lediglich parallele Innenflächen am Aufbau 24.

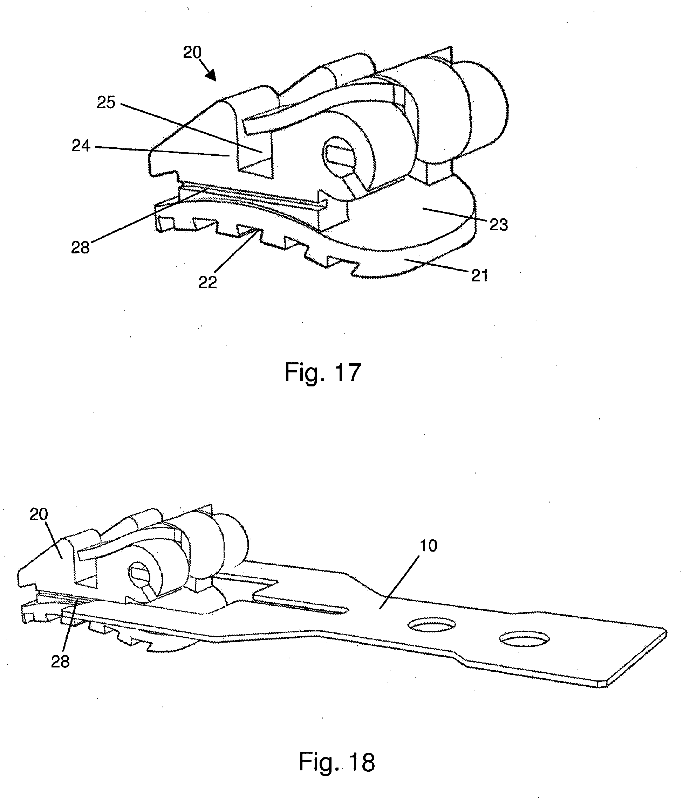

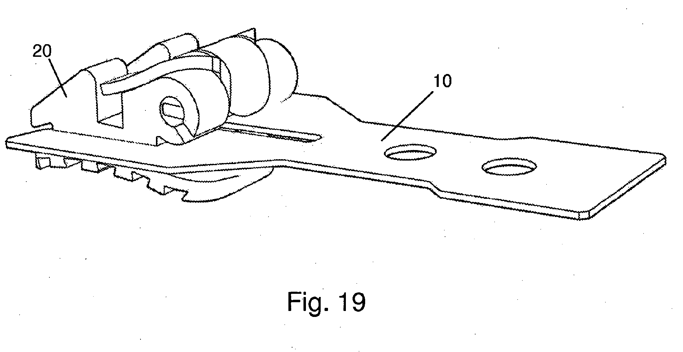

Die Fig. 18 und 19 zeigen in perspektivischer Ansicht eine erfindungsgemäße Montageanordnung in unterschiedlichen Positionen des Montagehilfsmittels an dem Bracket 20. Fig. 17 zeigt ein erfindungsgemäßes Bracket in einer weiteren Ausführungsform, wobei der an sich bekannte Bracketaufbau für die Funktionsweise der vorliegenden Erfindung nicht entscheidend ist. Dargestellt ist in den Fig. 17 bis 19 ein Bracketaufbau mit einem Federelement, mit dem der Richtdraht im Schlitz 25 fixiert wird. Wie zuvor erwähnt kommt es für das erfindungsgemäße Prinzip darauf an, dass die seitlichen Flanken des Aufbaus 24 im Wesentlichen parallele Flächen und am besten exakt parallele Führungsrillen 28 aufweisen, um die Längsseiten 14 der Schenkel 13 des Montagehilfsmittels exakt zu führen.

Mit der vorliegenden Erfindung wird eine Kombination aus einem Montagehilfsmittel und einem Bracket bereitgestellt, deren Handhabung, Konstruktion und Herstellung sehr einfach ist, gleichzeitig eine exakte und feste Verbindung zwischen den beiden Elementen herstellt, wenig Materialeinsatz erfordert und für eine Vielzahl von auf dem Markt befindlichen Brackets flexibel einsetzbar ist.

## Patentansprüche

1. Hilfsmittel (10) für die Montage von kieferorthopädischen Brackets, das aus einem Materialstreifen gebildet ist, mit einem ersten Ende (11) und einem zweiten Ende (12), das Einrichtungen zur formschlüssigen Anlage an dem Bracket aufweist,
**dadurch gekennzeichnet, dass**
die Einrichtungen zur formschlüssigen Anlage zwei Schenkel (13) umfassen, die sich gabelartig an dem zweiten Ende (12) erstrecken und deren Längsseiten (14) der Schenkel (13) im Wesentlichen parallel zueinander sind, wobei das Hilfsmittel (10) zwischen den beiden Schenkeln (13) einen Schlitz (15) aufweist.

2. Hilfsmittel (10) nach Anspruch 1, **dadurch gekennzeichnet, dass** es achsensymmetrisch ausgebildet ist und der Schlitz (15) sich im Wesentlichen entlang und auf der Symmetrieachse erstreckt.

3. Hilfsmittel (10) nach einem der vorhergehenden Ansprüche, **dadurch gekennzeichnet, dass** es aus Blech einer Dicke von ca. 0,15 mm bis ca. 0,8 mm gebildet ist.

4. Hilfsmittel (10) nach einem der vorhergehenden Ansprüche, **dadurch gekennzeichnet, dass** der Schlitz (15) eine Länge von ca. 1,0 mm bis ca. 5,0 mm und eine Breite von ca. 0,1 mm bis ca. 0,8 mm aufweist.

5. Hilfsmittel (10) nach einem der vorhergehenden Ansprüche, **dadurch gekennzeichnet, dass** mindestens ein Schenkel (13) mindestens eine Ausnehmung (17) aufweist.

6. Hilfsmittel (10) nach einem der vorhergehenden Ansprüche, **dadurch gekennzeichnet, dass** der Schlitz (15) an seinem geschlossenen Ende einen verbreiterten Abschnitt (18) aufweist.

7. Hilfsmittel (10) nach einem der vorhergehenden Ansprüche, **dadurch gekennzeichnet, dass** das erste Ende (11) mindestens eine Ausnehmung (16) aufweist.

8. Hilfsmittel (10) nach einem der vorhergehenden Ansprüche, **dadurch gekennzeichnet, dass** das erste Ende (11) eine Verbreiterung aufweist.

9. Kieferorthopädisches Bracket (20) mit einer Grundplatte (21), die eine Unterseite (22) zur Befestigung an einem Zahn und eine Oberseite (23) aufweist, und einem sich auf der Oberseite (23) erstreckenden Aufbau (24) mit mindestens zwei Flügeln (26, 27), zwischen denen sich ein Schlitz (25) zur Aufnahme eines Richtdrahtes erstreckt,
**dadurch gekennzeichnet, dass**
der Aufbau (24) seitlich zwei Führungsrillen (28) zum Aufschieben eines Hilfsmittels (10) aufweist, die im Wesentlichen parallel zueinander verlaufen, und die Führungsrillen (28) jeweils im Bereich zwischen dem Schlitz (25) und der Grundplatte (21) angeordnet sind.

10. Bracket (20) nach Anspruch 9, **dadurch gekennzeichnet, dass** die Führungsrillen (28) außen am Aufbau (24) ausgebildet sind.

11. Bracket (20) nach Anspruch 9, **dadurch gekennzeichnet, dass** die Führungsrillen (28) innen am Aufbau (24) derart ausgebildet sind, dass sie sich gegenüber liegen.

12. Bracket (20) nach einem der Ansprüche 9 bis 11, **dadurch gekennzeichnet, dass** die Führungsrillen (28) gerade oder leicht gebogen sind.

13. Montageanordnung für die Montage eines kieferorthopädischen Brackets an einem Zahn umfassend
ein Hilfsmittel (10) nach einem der Ansprüche 1 bis 8 und
ein kieferorthopädisches Bracket (20) nach einem der Ansprüche 9 bis 12,
wobei das Hilfsmittel (10) lösbar mit dem kieferorthopädischen Bracket (20) formschlüssig durch Aufeinanderschieben verbindbar ist, indem durch Aufschieben die Längsseiten (14) der Schenkel (13) des Hilfsmittels (10) in die Führungsrillen (28) des Brackets (20) eingreifen.

## Claims

1. Aid (10) for fitting orthodontic brackets formed from a material strip, having a first end (11) and a second end (12) which has means for shape-locking abutment against the bracket,
**characterised in that**
the means for shape-locking abutment comprise two legs (13) which extend in the manner of a fork at the second end (12) and of which the longitudinal sides (14) of the legs (13) are substantially parallel to each other, wherein the aid (10) has a slot (15) between the two legs (13).

2. Aid (10) according to claim 1, **characterised in that** it is formed axially symmetrically and the slot (15) extends substantially along and on the symmetry axis.

3. Aid (10) according to one of the preceding claims, **characterised in that** it is formed from sheet metal of a thickness of from approximately 0.15 mm to approximately 0.8 mm.

4. Aid (10) according to one of the preceding claims, **characterised in that** the slot (15) has a length of from approximately 1.0 mm to approximately 5.0 mm and has a width of from approximately 0.1 mm to approximately 0.8 mm.

5. Aid (10) according to one of the preceding claims, **characterised in that** at least one leg (13) has at least one recess (17).

6. Aid (10) according to one of the preceding claims, **characterised in that** the slot (15) has a widened portion (18) at its closed end.

7. Aid (10) according to one of the preceding claims, **characterised in that** the first end (11) has at least one recess (16).

8. Aid (10) according to one of the preceding claims, **characterised in that** the first end (11) has a widening.

9. Orthodontic bracket (20) with a base plate (21) which has a lower side (22) for fixing to a tooth and an upper side (23), and with a structure (24) extending on the upper side (23) with at least two wing elements (26; 27), between which a slot (25) for receiving a guide wire extends,
**characterised in that**
the structure (24) has laterally two guide grooves (28) for the sliding-on of an aid (10), which guide grooves (28) extend substantially parallel to each other and are each arranged in the area between the slot (25) and the base plate (21).

10. Bracket (20) according to claim 9, **characterised in that** the guide grooves (28) are formed externally on the structure (24).

11. Bracket (20) according to claim 9, **characterised in that** the guide grooves (28) are formed internally on the structure (24) so that they lie opposite each other.

12. Bracket (20) according to one of the claims 9 to 11, **characterised in that** the guide grooves (28) are straight or slightly curved.

13. Fixing assembly for fixing an orthodontic bracket to a tooth, comprising:
an aid (10) according to one of the claims 1 to 8 and an orthodontic bracket (20) according to one of the claims 9 to 12,
wherein the aid (10) can be detachably connected to the orthodontic bracket (20) in a shape-locking way through sliding one onto the other in that, through this sliding-on, the longitudinal sides (14) of the legs (13) of the aid (10) engage in the guide grooves (28) of the bracket (20).

## Revendications

1. Outil (10) pour le montage de brackets orthodontiques, qui est formé d'une bande de matériau, comprenant une première extrémité (11) et une deuxième extrémité (12), qui présente des dispositifs à installer par complémentarité de forme sur le bracket,
**caractérisé en ce**
**que** les dispositifs à installer par complémentarité de forme comprennent deux branches (13) qui s'étendent à la manière d'une fourche à la deuxième extrémité (12) et dont les côtés longitudinaux (14) des branches (13) sont essentiellement parallèles les uns aux autres, l'outil (10) présentant une fente (15) entre les deux branches (13).

2. Outil (10) selon la revendication 1, **caractérisé en ce que** l'outil est réalisé de manière axisymétrique, et **en ce que** la fente (15) s'étend essentiellement le long de l'axe de symétrie et sur ce dernier.

3. Outil (10) selon l'une des revendications précédentes, **caractérisé en ce que** l'outil est formé d'une tôle présentant une épaisseur d'environ 0,15 mm à environ 0,8 mm.

4. Outil (10) selon l'une des revendications précédentes, **caractérisé en ce que** la fente (15) présente une longueur d'environ 1,0 mm à environ 5,0 mm et une largeur d'environ 0,1 mm à environ 0,8 mm.

5. Outil (10) selon l'une des revendications précédentes, **caractérisé en ce qu'**au moins une branche (13) présente au moins un évidement (17).

6. Outil (10) selon l'une des revendications précédentes, **caractérisé en ce que** la fente (15) présente en son extrémité fermée une section (18) élargie.

7. Outil (10) selon l'une des revendications précédentes, **caractérisé en ce que** la première extrémité (11) présente au moins un évidement (16).

8. Outil (10) selon l'une des revendications précédentes, **caractérisé en ce que** la première extrémité (11) présente un élargissement.

9. Bracket (20) orthodontique comprenant une plaque de base (21) qui présente un côté inférieur (22) à fixer sur une dent et un côté supérieur (23), et présentant une structure (24) s'étendant sur le côté supérieur (23) pourvue d'au moins deux ailettes (26, 27) entre lesquelles s'étend la fente (25) servant à recevoir un fil de redressement,
**caractérisé en ce**
**que** la structure (24) présente sur les côtés deux rainures de guidage (28) servant à enfiler un outil (10), lesquelles s'étendent essentiellement de manière parallèle l'une à l'autre, et en ce que les rainures de guidage (28) sont disposées respectivement dans la zone entre la fente (25) et la plaque de base (21).

10. Bracket (20) selon la revendication 9, **caractérisé en ce que** les rainures de guidage (28) sont réalisées extérieurement sur la structure (24).

11. Bracket (20) selon la revendication 9, **caractérisé en ce que** les rainures de guidage (28) sont réalisées intérieurement sur la structure (24), de telle manière que les rainures de guidage se fassent face.

12. Bracket (20) selon l'une des revendications 9 à 11, **caractérisé en ce que** les rainures de guidage (28) sont rectilignes ou légèrement incurvées.

13. Ensemble de montage pour le montage d'un bracket orthodontique sur une dent, comprenant
un outil (10) selon l'une des revendications 1 à 8, et
un bracket (20) orthodontique selon l'une des revendications 9 à 12,
l'outil (10) pouvant être relié de manière amovible au bracket (20) orthodontique par complémentarité de forme par enfilage l'un sur l'autre, tandis que les côtés longitudinaux (14) des branches (13) de l'outil (10) viennent en prise avec les rainures de guidage (28) du bracket (20) par enfilage.
